# EUROPEAN PATENT APPLICATION

(11) **EP 2 014 205 A1**
(43) Date of publication of application: **14.01.2009**
(21) Application number: 08157165.5
(22) Date of filing: 29.05.2008
(51) Int. Cl.: A47J 37/12

(54) **Low oil volume fryer with small cold zone**

(30) Priority: 27.09.2007 US 904448; 12.07.2007 US 959259 P
(71) Applicant: The Frymaster Corporation, L.L.C., Shreveport, LA 71135-1000 (US)
(72) Inventor: Lackman, Lamont Eric, Keithville, LA 71047 (US); Hutchinson, Charles Milton, Shreveport, LA 71106 (US)
(74) Representative: von Kirschbaum, Alexander

(57) **Abstract**

A fryer pot (100) for a deep fryer (95) having a pair of opposed sidewalls (120,125), a pair of opposed end walls (140,145) and a bottom wall. Each of the pair of opposed sidewalls has three successive vertical portions (120a,120b,120c,125a,125b,125c). Wherein each of the three successive vertical portions of each of the pair of opposed sidewalls (120,125) is inboard of a preceding vertical portion to thereby taper the fryer pot towards the bottom wall A fryer pot for a deep fryer having a pair of opposed endwalls (140,145) and a pair of opposed sidewalls (120,125) and a bottom wall. Each of the pair of opposed endwalls (140,145) has a first vertical portion (145a) and a second vertical portion (145b) that are each connected by an angled offset portion (150) to decrease a volume of the fryer pot.

## Description

This application claims benefit of U.S. Provisional Patent Application Serial No. 60/959,259 filed on July 12,2007, the contents of which are incorporated by reference herein.

### BACKGROUND OF THE INVENTION

### 1. Field of the Invention

The present invention relates to a fryer pot for a gas fryer. More particularly, the present invention relates to a fryer pot for a gas fryer having a low oil volume (LOV) configuration. Still more particularly, the present invention relates to a fryer pot for a gas fryer having a low oil volume configuration that provides a narrowed region in which debris is retained.

### 2. Description of Related Art

Deep fryers that are used in the commercial cooking industry must be able to quickly heat oil and cook large amounts of food product to meet customers expectations Further, the cooking oil must be as free of debris as possible during the cooking process to extend its useful life. However, vendors must balance the customers' expectations with the high cost of cooking oil and fryer pot maintenance issues.

Although various designs of fryer pots have been developed in an effort to improve the overall cooking efficiency and useful life, drawbacks still exist. With an emphasis on rapid food preparation in large quantities of foodstuffs, existing fryer pots are very large and require high volumes of oil for the cooking process. Large volume fryer pots give rise to large heat transfer volumes, cool zone volumes and temperature gradients that present the possibility of induced stress in the fryer pot walls. Stresses on fryer pot walls are further exacerbated by pressure related stresses due to the weight of the large volume of oil that is contained in the fryer pot.

Accordingly, there exists a need for a fryer pot configuration that lowers the volume of required cooking oil while maintaining a sizable opening at the top of the cooking basket and provides a smaller channel at a lower portion thereof for effectively flushing the debris from the cooking oil.

### SUMMARY OF THE INVENTION

The present disclosure provides for a fryer pot having a reduced pot capacity in which the capacity is reduced by approximately 40% and the basket opening size is substantially retained.

The present disclosure also provides for a fryer pot having an open pot configuration without internal heat exchanger tubes or cavities and with all internal surfaces readily accessible Such a configuration reduces the quantity of oil contained in the fryer pot and allows for improved cleaning of internal pot surfaces.

The present disclosure also provides for a fryer pot having a reduced heat transfer and cold zone volumes thereby minimizing expansion induced stresses in the fryer pot walls.

The present disclosure further provides for a fryer pot having offset sidewalls and front and back walls, endwalls, to thereby reduce the volume of the fryer pot.

The present disclosure still further provides for a fryer pot having offset sidewalls and front and back walls, endwalls, to thereby reduce the cold zone at the bottom of the fryer pot.

The present disclosure still yet further provides for a fryer pot having a reduced volume cold zone to reduce the temperature gradient of the oil and form a region where debris can collect and not be recirculated into the cooking oil.

The present disclosure still yet further provides for a pressure switch on a surface of the fryer pot to provide an indication of sufficient oil level for burner activation.

The present disclosure still yet further provides for a reduced temperature gradient across the vertical heat transfer volume to minimize expansion induced stress in the fryer pot walls to lower the likelihood of fracture in service..

These and other further benefits and advantages are achieved by a fryer pot for a deep fryer having a pair of opposed side walls, a pair of opposed end walls and a bottom wall. Each of the pair of opposed sidewalls has three successive vertical portions Wherein each of the three successive vertical portions of each of the pair of opposed sidewalls is inboard of a preceding vertical portion to thereby taper the fryer pot towards the bottom wall.

A fryer pot for a deep fryer having a pair of opposed endwalls and a pair of opposed sidewalls and a bottom wall Each of the pair of opposed endwalls has a first vertical portion and a second vertical portion that are each connected by an angled offset portion to decrease a volume of the fryer pat.

A fryer pot for a deep fryer a pair of opposed sidewalls, wherein each of the pair of sidewalls has three portions. The fryer pot further provides for a pair of opposed endwalls, wherein each of the pair of endwalls has two vertical portions. The fryer pot further provides for a bottom wall wherein the pair of sidewalls and the pair of endwalls are connected to the bottom wall to form a tapered fryer pot having a reduced volume

### BRIEF DESCRIPTION OF THE DRAWINGS

Other and further benefits, advantages and features of the present disclosure will be understood by reference to the following specification in conjunction with the accompanying drawings, in which like reference characters denote like elements of structure.
Fig. 1 illustrates a front sectional view of a prior art fryer pot;
Fig. 2 illustrates a right side view of the prior art fryer pot of Fig. 1; sectional,
Fig 3 illustrates a front sectional view of the fryer pot according to the present invention; and
Fig. 4 illustrates a side sectional view of the fryer pot of Fig. 3 according to the present invention.

### DETAILED DESCRIPTION OF THE DISCLOSURE

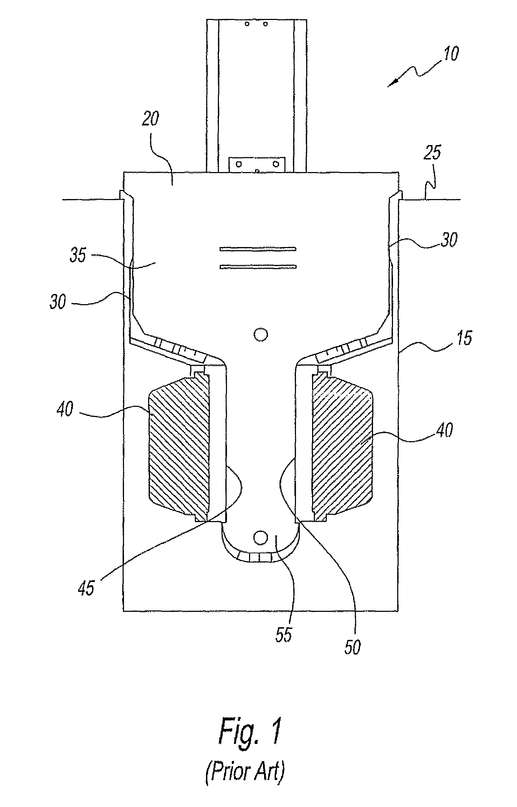

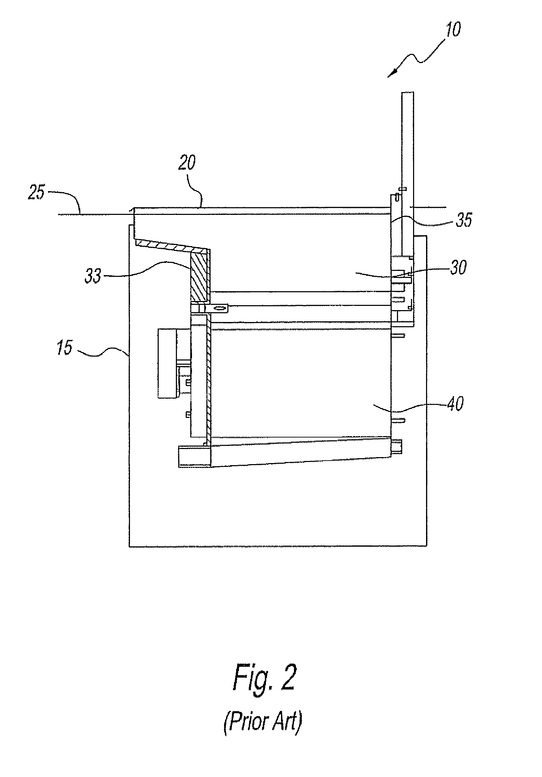

Referring to Figs. 1 and 2, there is illustrated a conventional cooking apparatus of the prior art particularly adapted for deep fat frying of food products. The apparatus illustrated is generally designated by the numeral 10 and is of a type used for commercial cooking purposes such as in fast food restaurants and other food service establishments. The apparatus 10 includes a generally rectangular uninsulated metal cabinet 15 forming an enclosure for a fryer pot assembly 20. Fryer pot assembly 20 is adapted to be removably inserted in the cabinet 15 and suitably supported by a top wall 25 Fryer pot assembly 20 includes opposed sidewalls 30 and opposed front and rear walls 33 and 35, respectively Front wall 33 is inboard relative to front edge of fryer pot assembly 20. Rear wall 35 is essentially vertical along its length. Opposed sidewalls 30 include lower vertical portions 45 and 50 that form a relatively narrow chamber 55 called a cold zone to minimize circulation of cooking debris during use. The four walls including sidewalls 30, front wall 33 and rear wall 35 form an opening sized to accommodate a fryer basket. Also contained within cabinet 15, are burners 40 on opposite sides of fryer pot assembly 20.

While the above described prior art fryer pot assembly 20 is commonly used, it has several drawbacks. Fryer pot assembly 20 is sized to hold approximately 50 pounds of cooking oil. The fryer pot assembly must be filled to a relatively high level in the pot to fill the cooking region occupied by a fryer basket. Accordingly, fryer pot assembly 20 requires a large volume of oil to be used.. Further, such a volume of oil causes not only thermal expansion induced stress due to thermal gradients but also stresses due to the weight of oil contained within the fryer pot assembly 20. The high thermal gradient within the oil itself further limits its useful life. The large cold zone while relatively narrow collects debris from the cooking process, however, it is not so confined that the insertion and removal of baskets prevent the debris from being recirculated into the cooking oil. The useful life of the cooking oil is thus reduced due to repeated degradation from the debris.

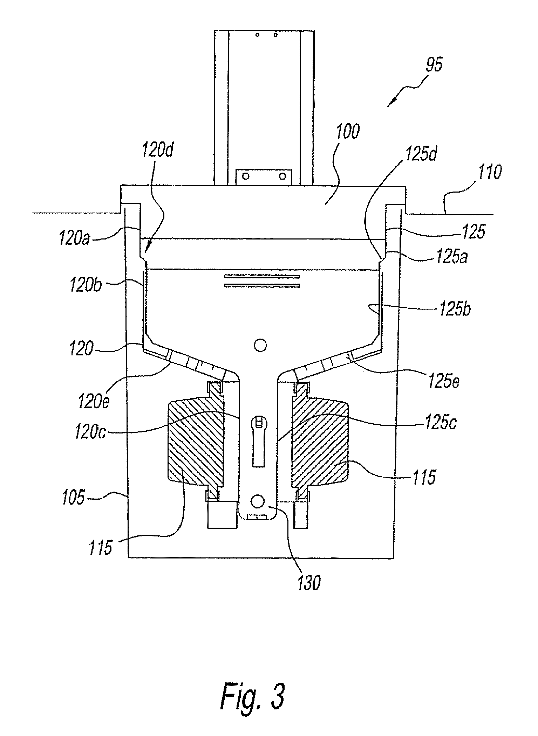

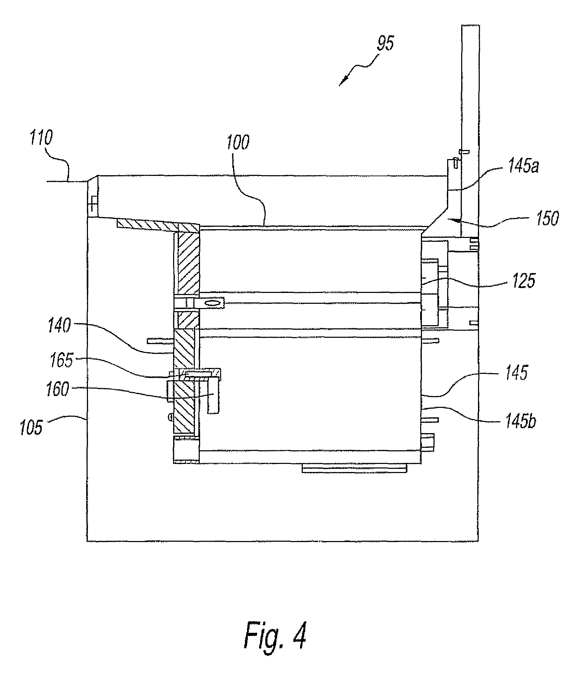

Referring to Figs. 3 and 4, a deep fryer assembly of the present invention is shown, and generally referenced using reference numeral 95. Deep fryer assembly 95 contains a fryer pot 100 that is contained in an uninsulated metal cabinet 105. The fryer pot 100 is adapted to be removably inserted into cabinet 105 and suitably supported by a top wall 110. Fryer pot assembly also has burners 115 on opposite sides of fryer pot 100 that are also contained within cabinet 105. By having burners 115 outside of fryer pot the overall open pot configuration is maintained.. Conventional fryer pots often are configured with heat exchanger tubes submersed within the cooking oil of the fryer pot Overall fryer pot operation is maintained by a control system having a controller.

Fryer pot 100 also includes opposed sidewalls 120 and 125, similar to the conventional fryer pot shown in Figs 1 and 2. However, sidewalls 120 and 125 each include three vertical portions 120a, 120b, 120c and 125a, 125b and 125c, respectively. Sidewalls 120 and 125 have offsets 120d and 120e and 125d and 125e, respectively. Offsets 120d, 120e, 125d and 125e reduce the overall width of fryer pot 100. Sidewalls 120 and 125 form a relatively narrow chamber 130 or a cold zone to minimize circulation of cooking debris during use Because of the offsets 120d, 120e, 125d and 125e, the width of cold zone 130 is narrower than the cold zone of the conventional fryer pot assembly 20. Thus, debris is more effectively trapped in cold zone 130 is easily flushed and cannot easily be recirculated during use..

Referring to Fig. 4, fryer pot 100 has a pair of endwalls, a front wall 140 and a rear wall 145 Front wall 140 is similar to front wall of the conventional fryer pot shown in Figs. 1 and 2, however, front wall 140 is more inboard relative to the front of cabinet 105 than front wall 33 is relative to cabinet 15. Rear wall 145 has two vertical portions 145a and 145b. Vertical portion 145a and 145b are connected by an offset 150 that is angled relative to both 145a and 145b. The offset 150 together with the inboard front wall 140 reduce the overall depth of fryer pot 100 from both the front and the rear of directions Thus, while the walls of fryer pot 100 are offset to form a smaller volume pot, the passage for a fryer basket is not substantially reduced to prevent proper operation.. Further, the smaller cold zone 130 formed from both sides of fryer pot 100 reduces the thermal gradient between cold zone 130 and the cooking region of fryer pot 100. The smaller cold zone reduces the thermal stresses that are experienced along pot walls.

Additionally, fryer pot 100 includes a pressure switch sensor for determining when there is sufficient oil in fryer pot 100 to activate burners 115. Fryer pot 100 includes a standpipe 160 in front wall 140. Standpipe 160 includes a pressure switch 165 that is positioned to build pressure after the oil rises above the lower opening of the pipe during refill after a filter sequence. Once the oil is sufficiently deep to cover the heat transfer areas, pressure switch 165 signals the control system that it is safe to activate burners 115. Standpipe 160 is positioned such that the pressure measured is approximately 5 to 8 inches of water column which is easily detected by standard industrial sensors but allows the standpipe to be located high enough that food fall off during cooking dos not impact its operation.

The present invention having been thus described with particular reference to the preferred forms thereof, it will be obvious that various changes and modifications may be made therein without departing from the spirit and scope of the present invention as defined in the disclosure

## Claims

1. A fryer pot for a deep fryer comprising:
a pair of opposed sidewalls, a pair of opposed end walls and a bottom wall;
each of said pair of opposed sidewalls comprises three successive vertical portions,
wherein each of said three successive vertical portions of each of said pair of opposed side walls is inboard of a preceding vertical portion to thereby taper said fryer pot towards said bottom wall

2. The fryer pot according to claim 1, wherein each of said pair of opposed endwalls has two vertical portions that are configured to taper said fryer pot towards said bottom wall..

3. The fryer pot according to claim 1, wherein each of said three successive vertical portions is connected to another of said three successive vertical portions by at least one angled offset portion.

4. The fryer pot according to claim 2, wherein each of said two vertical portions of each of said pair of opposed endwalls are connected to each other by an angled offset portion to taper said fryer pot towards said bottom wall.

5. The fryer pot according to claim 1, wherein said pair of opposed side walls and said opposed endwalls are connected to said bottom wall to form a narrowed portion, said narrowed portion being disposed between a pair of burners.

6. The fryer pot according to claim 2, wherein one of said pair of endwalls is a front wall, said front wall further comprising a standpipe..

7. The fryer pot according to claim 6, wherein said standpipe further comprises a pressure switch that is capable of sensing a predetermined pressure from cooking oil in said fryer pot..

8. The fryer pot according to claim 7, where a controller operatively associated with the deep fryer is capable of activating a pair of burners after sensing said predetermined pressure from the cooking oil in said fryer pot.

9. The fryer pot according to claim 5, wherein said burners are external to said fryer pot to maintain an open pot configuration.

10. A fryer pot for a deep fryer comprising:
a pair of opposed endwalls and a pair of opposed sidewalls and a bottom wall,
wherein each of said pair of opposed endwalls has a first vertical portion and a second vertical portion that are each connected by an angled offset portion to decrease a volume of said fryer pot

11. The fryer pot according to claim 10, each of said pair of opposed sidewalls further comprises three successive vertical portions,
wherein each of said three successive vertical portions is inboard of a preceding vertical portion to thereby taper each of said pair of opposed sidewalls towards said bottom wall.

12. The fryer pot according to claim 10, wherein said first vertical portion and said second vertical portion of each of said pair of opposed endwalls is configured to taper each of said pair of endwalls towards said bottom wall

13. The fryer pot according to claim 11, wherein said three successive vertical portions of each of said pair of sidewalls are connected to another of said three successive vertical portions of said a sidewall by at least one angled offset portion

14. The fryer pot according to claim 10, wherein said pair of opposed sidewalls and said opposed endwalls are connected to said bottom wall to form a narrowed portion, said narrowed portion disposed between a pair of burners.

15. The fryer pot according to claim 10, wherein one of said pair of endwalls is a front wall, said front wall further comprising a standpipe

16. The fryer pot according to claim 14, wherein said standpipe further comprises a pressure switch that is capable of sensing a predetermined pressure from cooking oil in the fryer pot.

17. The fryer pot according to claim 16, where a controller operatively associated with the deep fryer is capable of activating a pair of burners after sensing said predetermined pressure from cooking oil to commence heating.

18. The fryer pot according to claim 14, wherein said pair of burners are disposed external to said fryer pot to maintain an open pot configuration.

19. A fryer pot for a deep fryer comprising.
a pair of opposed sidewalls, wherein each of said pair of sidewalls has three portions;
a pair of opposed endwalls, wherein each of said pair of endwalls has two vertical portions: and
a bottom wall
wherein said pair of sidewalls and said pair of endwalls are connected to said bottom wall to form a tapered fryer pot having a reduced volume.

20. The fryer pot according to claim 19, wherein each of said pair of opposed sidewalls further comprises three successive vertical portions,
wherein each of said three successive vertical portions is inboard of a preceding vertical portion to thereby taper each of said pair of opposed outer sidewalls towards said bottom wall.

21. The fryer pot according to claim 19, wherein said first vertical portion and said second vertical portion of each of said pair of endwalls is configured to taper each of said pair of endwalls towards said bottom wall.

22. The fryer pot according to claim 19, wherein said three successive vertical portions of each of said pair of sidewalls are connected to another of said three successive vertical portions of said a sidewall by at least one angled offset portion.

23. The fryer pot according to claim 19, wherein said pair of opposed sidewalls and said opposed endwalls are connected to said bottom wall to form a narrowed portion, said narrowed portion being disposed between a pair of burners.

24. The fryer pot according to claim 19, wherein one of said pair of endwalls is a front wall, said front wall comprising a standpipe.

25. The fryer pot according to claim 24, wherein said standpipe comprises a pressure switch that is capable of sensing a predetermined pressure from cooking oil in the fryer pot.

26. The fryer pot according to claim 25, wherein a controller operatively associated with the deep fryer is capable of activating a pair of burners after sensing said predetermined pressure from said cooking oil to commence heating

27. The fryer pot according to claim 23, wherein said pair of burners are disposed external to said fryer pot to maintain an open pot configuration.
